# EUROPEAN PATENT APPLICATION

(11) **EP 4 092 352 A1**
(43) Date of publication of application: **23.11.2022**
(21) Application number: 21708052.2
(22) Date of filing: 18.01.2021
(51) Int. Cl.: F24S 40/20, H02S 40/10

(54) **CLEANING DEVICE FOR A SOLAR CONCENTRATION SYSTEM**

(30) Priority: 16.01.2020 ES 202030024
(71) Applicant: Rioglass Solar, S.A.U., 33695 Pola de Lena, Lena, Asturias (ES)
(72) Inventor: UBACH CARTATEGUI, Josep, 33695 Pola de Lena, Lena, Asturias (ES); AINZ IBARRONDO, Félix, 26200 Haro, La Rioja (ES)
(74) Representative: ABG Intellectual Property Law, S.L.
(86) International application number: PCT/ES2021/070022
(87) International publication number: WO 2021/144493

(57) **Abstract**

The present invention relates to a cleaning device, to a solar concentration system, and to a cleaning method for solar concentrators with a linear Fresnel configuration. The present invention particularly relates to a cleaning device for solar reflectors used in solar farms, such as solar thermal power plants, which allows reducing the time and the consumption of water and resources used in maintaining the solar concentration system, as well as increasing the efficiency of solar collectors.

## Description

### OBJECT OF THE INVENTION

The present invention relates to a cleaning device, to a solar concentration system, and to a cleaning method for solar concentrators with a linear Fresnel configuration. The present invention particularly relates to a cleaning device for solar reflectors used in solar farms, such as solar thermal power plants, which allows reducing the time and resources used in maintaining the solar concentration system, as well as increasing the efficiency of solar collectors.

The cleaning device comprises cleaning means for removing dirt and drying the surface of the reflectors to prevent the formation of spots left from drying, which allows a lower-quality cleaning fluid, for example cleaning water with a lower purity, to be used, increasing energy production.

The invention is particularly indicated for use in installations with linear Fresnel collector technology, and it is particularly suitable for linear Fresnel technology installations with the rows of reflectors arranged at different heights, also called three-dimensional Fresnel technology.

### BACKGROUND OF THE INVENTION

Solar concentration technology possesses enormous potential for contributing to the development of sustainable industrial production by means of its integration into industrial installations. The application possibilities are as extensive as the number of companies that use heat directly in the processes. To mention an example, its use could be implemented in the food and beverage industry, mining, climate control, the chemical industry, paper industry, etc.

At present there are numerous solar concentration technologies with different degrees of development which allow the solar radiation received and reflected by an assembly of solar reflectors or mirrors to be concentrated at one or several focal points. The most widely developed solar concentration technologies today are tower concentrators, parabolic trough collector (PTC)-based technology and linear Fresnel collector technology.

These different solar concentration technologies can be used for high-temperature applications, which allow the subsequent production of electricity, as well as for low- and medium-temperature applications, which enable the direct application of the generated heat for industrial uses. The criteria for choosing one type of technology or another according to the application correspond to technical and economic reasons, based on the application that the designer considers in each case. From this viewpoint, linear Fresnel technology is one of the most versatile technologies, and it is particularly interesting for medium-temperature applications in the range of 150°C to 400°C, which allows it to be applied directly in industrial processes.

Linear Fresnel collectors use a plurality of generally elongated reflectors, also called mirrors, arranged in rows with their longitudinal axes parallel to one another, and can be contained in a single horizontal plane or in several planes at different heights. These reflectors are usually planar or have a slight curvature, i.e., a very large radius of curvature compared with the remaining dimensions of the reflector.

Moreover, Fresnel reflectors can rotate about their longitudinal axis with respect to the structure supporting them, such that they can be oriented according to the angle of incidence of the sun at all times of the day individually or synchronously. Because of their arrangement, the rows of mirrors concentrate the radiation along a fixed focal line, where a receiver tube carrying a fluid heated by the concentrated solar radiation through the mirror assembly is arranged. The rows of reflectors are typically grouped in two sections arranged symmetrically on both sides of the receiver tube.

An example of a horizontal linear Fresnel concentration system can be found in PCT application number WO2012025356A1, which describes a Fresnel solar collector with pivoting mirrors.

A linear Fresnel collector typology with parallel rows of mirrors located at different heights is described in unpublished European patent application EP 18382454. Both in said patent application and in the context of the present document, this type of Fresnel collector is referred to as a three-dimensional Fresnel.

However, in practice linear Fresnel installations do not have the expected degree of implementation given the current level of technical development and the advantages it presents.

In this sense, an important obstacle for a major development of these technologies in industrial environments is the high cost and the technical drawbacks of cleaning tasks for cleaning reflectors in the solar field. The present invention proposes a solution to this problem, not only by reducing the resources required and overcoming the technical drawbacks of these tasks, but also by increasing the efficiency of the solar concentration system and therefore the energy production of the installation.

In particular, cleaning the reflectors is a key requirement among the operating and maintenance tasks in solar power plants, since it has a direct impact on power plant production. This is because energy production is directly proportional to the ratio between the energy flux reflected by the mirrors and the incident radiation that reaches them. This ratio, also called reflectance, determines the overall efficiency of the installation.

Given the exposure of the collectors to the elements, dirt accumulates on the surface of the mirrors and reduces reflectance values, seriously affecting the energy production of the installation. Although dirt levels depend on the geographic location, these drawbacks are exacerbated when installations of this type are constructed in industrial areas with a high organic matter and suspended particle content deposited on the mirrors. This dirt gradually accumulates on the surface of the reflectors, where it could harden with moisture, generating short-term losses in reflectance and long-term corrosion problems which may result in the degradation of the mirror itself. Assuring effective cleaning on a regular basis is a fundamental requirement for correct operation and cost-effectiveness of a solar farm.

To solve this problem, cleaning devices and methods are known today for systems with linear Fresnel technology that are based on the use of robots which clean a single row of mirrors in each pass, so they require long times for cleaning the solar field in its entirety. Similar solutions are used in photovoltaic installations, where a robot performs cleaning for each row of collectors individually.

A widespread alternative is manual cleaning. This option requires both time and the use of robots, with the added drawback of requiring a large amount of manpower.

Other solutions known in the state of the art propose automatic mirror cleaning systems with a plurality of robots, one per row, which clean several rows simultaneously in each pass. An example of this solution is described in patent document US8240320.

It should also be taken into consideration that cleaning the reflectors usually requires adding water or another cleaning fluid to entrain the dirt from the surface. In areas with arid climates or where there is a shortage of water, the regular supply of tap water in abundance may be problematic or even impracticable, so the water must be brought in by other means. Furthermore, the quality of the water used in cleaning affects the reflectance of the collector, because when the impurities contained in the water dry, they form spots on the surface of the mirrors.

Patent document CN204052215 describes a cleaning system which can simultaneously clean the mirrors of different rows of one and the same cross-section of the Fresnel collector. The system of this document has mobile cleaning units which adapt to the different positions the mirrors may adopt by means of telescopic anchorings. Furthermore, the guidance of the main structure or frame of the cleaning system is integrally supported at the ends of the mirrors. These two factors make it necessary to generate a highly rigid structure as a supporting frame of the assembly, which results in a very complex and heavy structure of the assembly.

### DESCRIPTION OF THE INVENTION

The present invention proposes a solution to the aforementioned problems by means of a cleaning device for a solar concentration system according to claim 1, a solar concentration system according to claim 10, and a cleaning method for a solar concentration system according to claim 11. The dependent claims define preferred embodiments of the invention.

A first inventive aspect provides a *cleaning device for a solar concentration system with a linear Fresnel configuration, wherein the solar concentration system comprises a plurality of reflectors that are substantially elongated and arranged in rows parallel to a longitudinal direction; wherein the cleaning device comprises:*
*a mobile frame configured for moving along the longitudinal direction,*
*connection means rigidly attached to the mobile frame,*
*a guidance system attached to the mobile frame and configured for guiding the movement of the cleaning device along the longitudinal direction,*
*a support system attached to the mobile frame and configured for supporting the cleaning device in a sliding manner on at least one point of the solar concentration system, and for separating the mobile frame from the reflectors,*
*spraying means for spraying the surface of the reflectors with a cleaning fluid, and*
*at least a set of cleaning means for each row of reflectors, configured for cleaning and drying the surface of the reflectors,*
*such that the cleaning means allow a plurality of rows of reflectors to be cleaned simultaneously by means of the movement of the mobile frame along the longitudinal direction between a first end of the rows of reflectors and a second end of the rows of reflectors,*
*wherein the cleaning means,*
   *comprise a squeegee with a configuration complementary to the surface of the reflectors, arranged substantially transverse to the longitudinal direction (L) and configured for contacting the surface of the reflectors, and*
   *are attached in an articulated manner to the connection means, such that the cleaning means can swing suspended from the connection means, and*
*wherein the connection means comprise at least one stop configured in order to limit the swinging movement of the cleaning means.*

Throughout this document, solar concentration system with a linear Fresnel configuration should be understood to mean the assembly of reflectors, receiver tubes, structural elements, and other elements required for the correct operation of the solar collector, wherein the mirrors or reflectors are configured for concentrating solar radiation along a single focal line on which the receiver tube is positioned.

The present invention advantageously applies to the so-called linear conventional high- and low-temperature Fresnel systems, and particularly to three-dimensional Fresnel systems. Nevertheless, the present invention may also be applied to other solar concentration technologies, water heating systems for low-temperature applications by means of solar radiation, or even photovoltaic installations.

*Clean* must be understood to mean the action of removing dirt accumulated on the surface of solar reflectors; this dirt can be in the form of solid particles of different sizes, such as dust or sand particles, in the form of liquid residues, in a mixed liquid and solid form, etc. One way to clean the dirt is to apply a cleaning fluid which wets the dirt, and to remove the fluid loaded with dirt by moving it, for example, pushing it with a squeegee towards the edges of the surface; this way of cleaning may leave behind traces of fluid which will normally dry naturally on the reflectors. If the fluid contains non-volatile components, they may leave spots from drying on the surface of the reflectors, the capacity of which for concentrating solar radiation drops. *Dry* must be understood herein to mean the action of removing the liquid from a surface, in this case from the surface of the reflectors.

The invention proposes a solution to the problems mentioned in the preceding section by means of a cleaning device capable of simultaneously cleaning and drying several rows of mirrors of one and the same section on one side of the receiver tube, or even all the rows of mirrors of the two sections of the collector, on both sides of the tube. The time required to finish cleaning the solar concentration system, wherein each section of the collector could be cleaned by means of a single pass, can thereby be reduced. That is, the present cleaning device is configured for each set of cleaning means to be arranged for each row of reflectors. *Pass* must be understood to mean herein the movement of the cleaning device between a first end of the row or rows of reflectors, and a second end of the row or rows of reflectors, according to the longitudinal direction defined above; by means of this movement, each of the sets of cleaning means passes or sweeps over the entire surface of a row or several rows of reflectors. This reduction in the time used in cleaning also has a positive effect on the efficiency of the solar concentration system, given that the time invested in performing cleaning is time that cannot be used in concentrating solar radiation.

Moreover, the cleaning device comprises a smaller number of elements that can be readily adapted to the dimensions and characteristics of each collector and give rise to a lightweight device the load of which is distributed on the reflectors to the structure of the collector through one or more intermediate support points. As a further consequence, the mobile frame supporting the remaining elements of the device can be more lightweight and easier to manufacture than other solutions of the state of the art for cleaning a collector of a given width.

Furthermore, as a result of the cleaning means, the cleaning device removes traces of water or other cleaning fluid from the surface of the reflectors, so it can use water with a lower degree of purity as a cleaning fluid without reducing the efficiency of the collector. Under conditions of dew or rain, the invention advantageously allows this dew water to be used as a cleaning fluid for the surface of the reflectors. The demand for cleaning water in the device can thereby be reduced, and, depending on environmental conditions, dew water can be used exclusively as a cleaning fluid. In particular, the spraying means are attached to the mobile frame.

The squeegee advantageously allows cleaning and drying the surface of the reflectors, removing dirt particles and traces of cleaning fluid from the surface of the reflectors. Furthermore, a squeegee manufactured from a flexible material advantageously allows being adapted to the particular dimensions of the reflector, for example to its radius of curvature, so a single squeegee model can be used in a wide variety of solar concentration systems.

Likewise, the configuration of the attachment between the cleaning means and the connection means establishes an attachment by means of simple and readily machinable elements and they can be assembled by non-specialized personnel without any difficulties. This articulated attachment allows maintaining the position between the surface of the reflector and the cleaning means, the operation of which depends on there being continued contact with the surface of the reflectors for moving the cleaning fluid. Furthermore, the articulated attachment allows the cleaning means to be suspended and to swing when they reach the end of stroke of the cleaning device due to the effect of gravity without requiring actuation or operator intervention.

Moreover, the stop or stops allow establishing a support point for the cleaning means such that when the mobile frame moves, the cleaning means exert tension on the surface of the reflectors, assuring continuous contact with the surface of the reflectors. This feature is particularly advantageous when the squeezing and cleaning means are squeegees or blades, since they allow moving or pushing the cleaning water towards the edges of the reflectors.

The support system advantageously provides means for transferring and distributing the weight of the assembly of the cleaning device over the solar concentration system, preferably over the surface of the reflectors; to achieve a homogenous distribution of the weight that prevents damage to the surface of the reflectors, according to this embodiment the support system has a plurality of support elements, one for each of the connection means, which are rigidly attached to the mobile frame to transfer the load better. Furthermore, the support system has a secondary guidance function for guiding the cleaning device, comprising in a particular embodiment, support elements which are supported in a sliding manner on the edge of the reflectors.

In a particular embodiment, the cleaning device further comprises a fixed brush attached to the mobile frame and configured for removing solid dirt particles from the surface of the reflectors.

The fixed brush advantageously allows distributing the cleaning fluid over the surface of the reflector such that the dirt adhered to the reflector softens; furthermore, the fixed brush can move foreign bodies and the largest dirt particles to prevent them from damaging or getting caught in the cleaning means.

In a particular embodiment, the washing or cleaning means comprise an ultrasonic cleaning device.

The ultrasonic cleaning means advantageously allow cleaning the reflectors without producing direct contact between the source of the ultrasound and the dirt particles.

In a particular embodiment, *the connection means have a planar configuration, and comprise two arms parallel to the longitudinal direction and two arms perpendicular to the longitudinal direction.*

The connection means are advantageously constructed in a simple and resistant manner, for example, by means of sheet metal transformation; furthermore, the cross configuration with two perpendicular arms allows a large number of elements to be attached to the connection means with a minimum number of parts.

In a particular embodiment, *the guidance system comprises one or more first rolling elements guiding the movement of the mobile frame by means of rolling on a rail arranged parallel to the rows of reflectors.*

The rolling elements of the guidance system advantageously not only allow the device to be kept aligned with the longitudinal direction, but also allow the frame to move with minimum drag. Furthermore, in a particular embodiment, the rail is attached to the structure of the solar concentration system, such that it allows part of the weight of the cleaning device to be transmitted.

In a particular embodiment, *the support system comprises one or more second rolling elements for supporting the mobile frame on the surface of the reflectors by means of rolling, these second rolling elements being attached to the mobile frame by interconnection means.*

Like the first rolling elements of the guidance system, the second rolling elements of the support system allow the weight of the cleaning device to be distributed and the mobile frame separated from the surface of the reflectors, preferably at a distance allowing the interaction of the cleaning means with the surface of the reflectors.

In a particular embodiment, *the support system comprises one or more second rolling elements for supporting the mobile frame on the edge of the reflectors by means of rolling, these second rolling elements being attached to the mobile frame by means of a protruding structure.*

In this case, the second rolling elements rolling on the edge of the reflectors not only serve as a support for the mobile frame through a protruding structure, but rather in turn serve as a guide for the cleaning means for them to run along a row of reflectors in a linear manner. That is, the rolling elements rolling on the edge of the reflectors prevent the support system from sliding transverse to the longitudinal direction on the surface of the reflectors.

In one embodiment, the rolling means are polyurethane or nylon wheels, which advantageously prevent deterioration of the surface of the mirrors.

In a particular claim, *the guidance system further comprises an electric drive system configured for moving the mobile frame along the longitudinal direction by applying torque on the first rolling elements of the guidance system.*

The electric drive advantageously allows automating the movement of the cleaning device; in particular, it allows transforming the rolling elements into drive wheels which move forward on a rail which is advantageously attached to the structure of the solar concentration system.

In a particular embodiment, *the mobile frame comprises a beam with a U-shaped profile arranged substantially transverse to the longitudinal direction.*

The beam advantageously constitutes the main structural element of the cleaning device and provides the required rigidity to the assembly of the cleaning device for distributing the weight and removing dirt; the transverse beam furthermore allows covering an entire section of the collector and in that sense enabling all the rows of reflectors of the section to be cleaned simultaneously in a single pass. In a preferred embodiment, the beam comprises an elongated U-shaped profile of a light alloy or metal. By means of this configuration, a lightweight, simple, and resistant structure is achieved. In a particular embodiment, the connection means are welded to the beam of the mobile frame.

In a particular embodiment, the electric drive is controlled by an electronic control system.

In a preferred embodiment, the electric drive comprises an electric motor operatively attached to the rolling means, an electric accumulator, or a source of energy and a control system, such as for example a programmable logic controller or a computer controlling the drive; by means of these elements, the cleaning device can operate in a virtually automatic manner, without operator intervention.

In a particular embodiment, the device comprises at least one *resting structure configured for supporting the mobile frame and configured for being arranged at one end or both ends of the concentration system according to the longitudinal direction.*

Advantageously, the resting structure or structures allow the cleaning device to be supported when it is not in use, such that it does not obstruct the passage of solar radiation. Even more advantageously, the resting structure or structures can be used as an end point in the movement of the frame on which the change in direction of the movement is performed; for this purpose, in one embodiment the resting structure comprises recesses which allow the cleaning means to freely swing suspended from the connection means due to the action of gravity.

In a particular embodiment, *the spraying means comprise a water receptacle, an impulse pump, and a plurality of sprayers, all of them being in fluid communication and configured for spraying the surface of the reflectors with a cleaning fluid.*

The water receptacle, the impulse pump, and the plurality of sprayers are advantageously in fluid communication with one another and attached to the mobile frame, preferably on the latter, such that the water coming from the receptacle is pumped by means of the impulse pump through conduits to the plurality of sprayers, which spray water or another cleaning fluid on the surface of the reflectors, preferably on a portion of the surface of the reflectors adjacent to the cleaning means. The cleaning device can use any cleaning fluid, provided that it is suitable for cleaning the mirrors, but preferably water is used given that it is widely available and environmentally harmless.

In a second inventive aspect, the invention provides a *solar concentration system with a linear Fresnel configuration, comprising a cleaning device according to the first inventive aspect.*

A solar concentration system with a cleaning device allows the reflectors to be kept in an optimal clean state after a single pass of the cleaning device along the rows of reflectors. This combination is particularly advantageous because cleaning of the reflectors can be performed at any time, and in particular when environmental conditions or other factors, such as the position of the sun, are suitable, so that the cleaning process does not necessarily interrupt energy production.

In a third inventive aspect, the invention provides a *cleaning method for a solar concentration system with a linear Fresnel configuration, which is applied when the action for cleaning the surface of the reflectors of the solar concentration system is required, wherein the method comprises the following steps:*
*providing a solar concentration system according to the second inventive aspect,*
*moving the mobile frame between a first end of the solar concentration system and a second end of the solar concentration system opposite the first end, according to the longitudinal direction, while at the same time the spraying means spray the surface of the reflectors with a cleaning fluid,*
*once the mobile frame has reached the second end of the solar concentration system, changing the direction of movement so that the mobile frame returns to the initial position.*

The cleaning method advantageously allows the surfaces of a plurality of reflectors to be kept clean in a more efficient manner than the known methods do. In particular, it allows removing dirt from an assembly of rows of reflectors simultaneously in a single pass of the cleaning device in each direction, saving in cleaning time during which the solar concentration system cannot be operated.

Even more advantageously, the method allows taking advantage of the dew water that forms naturally on the surface of the reflectors, such that if such dew water is present, supplying additional cleaning fluid, for example, water, can be dispensed with, favoring its implementation in locations with a shortage of water. In this sense, the suitable time for implementing the cleaning method would be the period of time between maximum dew formation on the mirrors and the increase in temperature which causes the evaporation of moisture; it is appropriate for this period to coincide with the early hours of the morning, i.e., when there is less solar radiation and less of it can be taken advantage of, so the interruption to collector operation is minimal.

All the method steps and/or features described in this specification (including the claims, description, and drawings) can be combined in any combination, with the exception of combinations of such mutually exclusive features.

### DESCRIPTION OF THE DRAWINGS

These and other features and advantages of the invention will become more apparent from the following detailed description of a preferred embodiment, given solely by way of non-limiting, illustrative example in reference to the attached figures.
- Figure 1: This figure shows a solar concentration system with a cleaning device arranged transverse to the longitudinal direction.
- Figure 2: This figure shows a cleaning device with its main elements.
- Figure 3: This figure shows an enlarged view of the cleaning device.
- Figure 4: This figure shows a detail of the cleaning means, the connection means, and the support system, left resting on a reflector.
- Figure 5: This figure shows another detail view, in which the reflector is not shown.
- Figure 6: This figure shows a detail of the guidance system.
- Figure 7: This view shows the guidance system from another angle.
- Figure 8: This view shows the solar concentration system together with the cleaning device and the rail parallel to the longitudinal direction.
- Figure 9: This figure shows the solar concentration system and the cleaning device arranged on the resting platform.
- Figure 10: This figure shows another view of the solar concentration system, with the cleaning device separated from the resting platform.

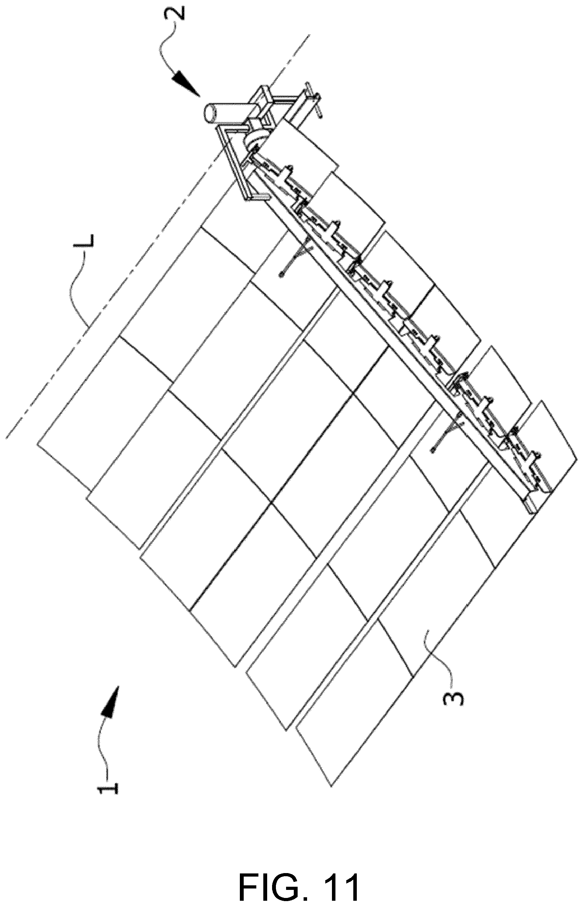

- Figure 11: This figure shows an embodiment of the solar concentration system with a cleaning device of Figure 1 with a fixed brush having flexible bristles attached to the mobile frame.

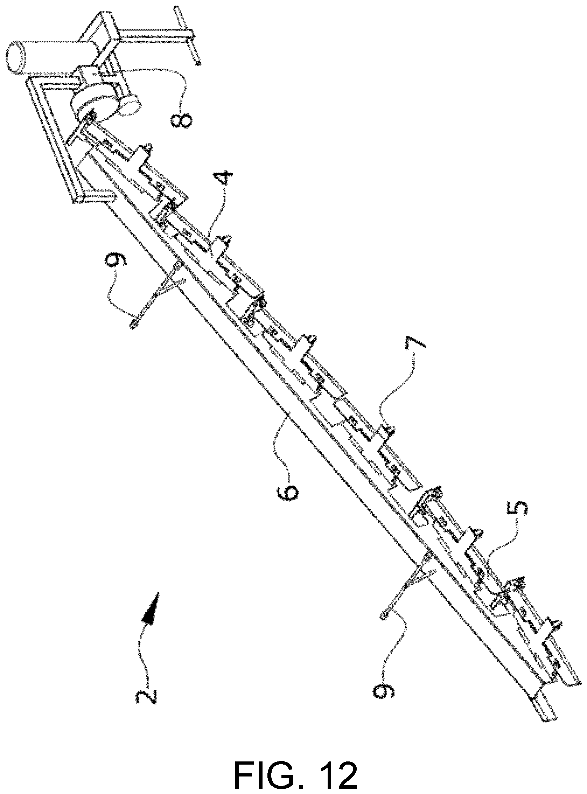

- Figure 12: This figure shows an embodiment of the cleaning device of Figure 2 with a fixed brush having flexible bristles attached to the mobile frame.
- Figure 13: This figure shows an enlarged view of the same embodiment of the cleaning device with a fixed brush having flexible bristles attached to the mobile frame.
- Figure 14: This figure shows a detail of the cleaning means, the connection means, the fixed brush having flexible bristles attached to the mobile frame, and the support system, left resting on a reflector.
- Figure 15: This figure shows another detail view of the same embodiment, in which the reflector is not shown.

### DETAILED DESCRIPTION OF THE INVENTION

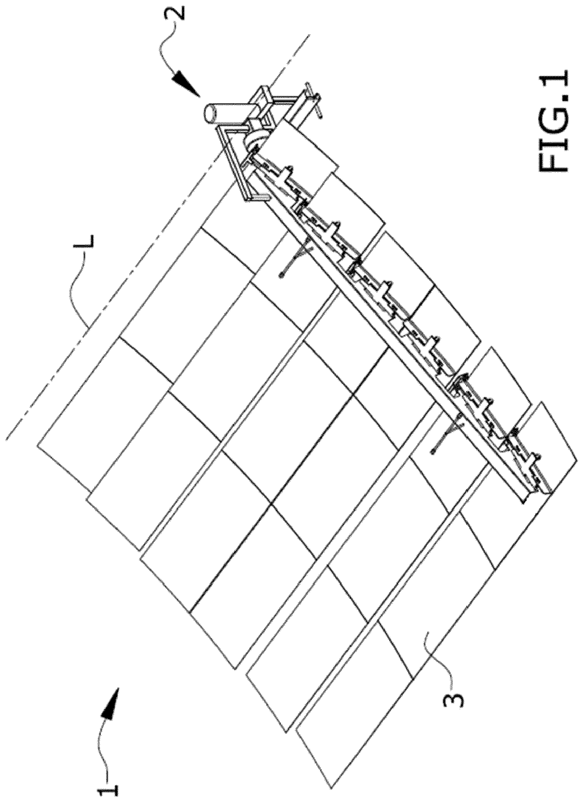

Figure 1 shows a preferred embodiment of the invention, in which a cleaning device (2) is arranged on a solar concentration system (1), depicted in the figure by means of six rows of rectangular reflectors (3) arranged at different heights. In Figure 1, the rows of reflectors (3) are arranged parallel to a longitudinal direction (L).

According to the longitudinal direction (L), each of the rows of reflectors (3) has a first end and a second end opposite the first end. The movement of the cleaning device (2) between these two ends along the longitudinal direction (L) will give rise to a pass of the cleaning device (2).

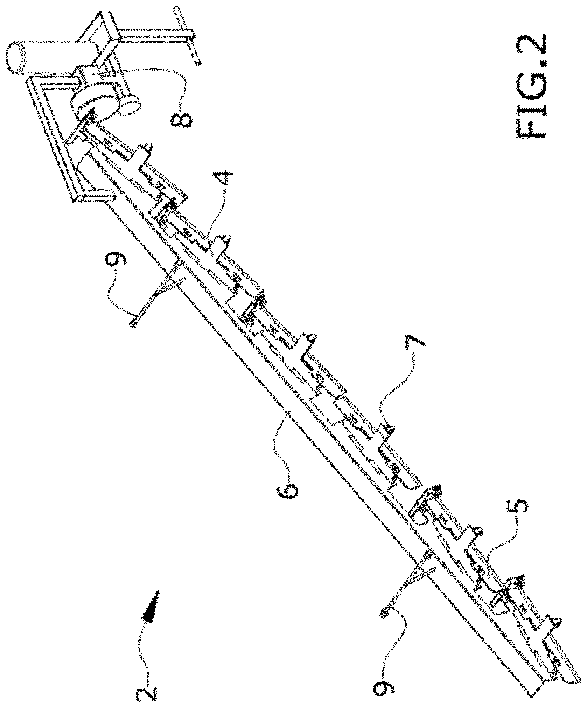

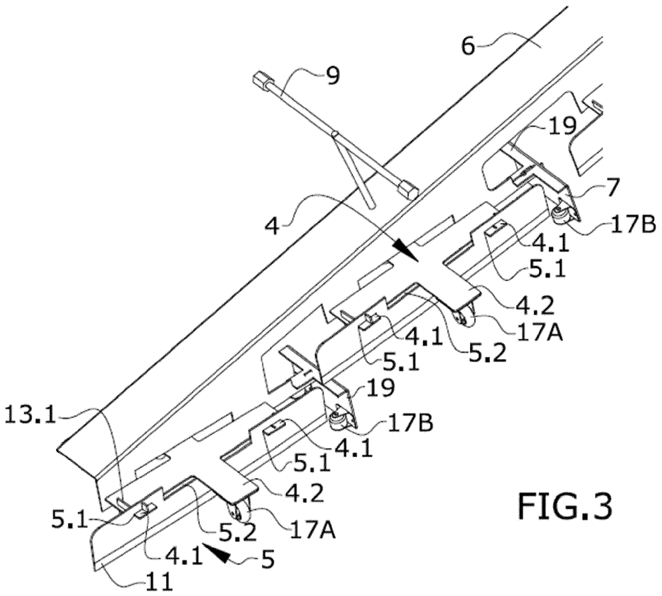

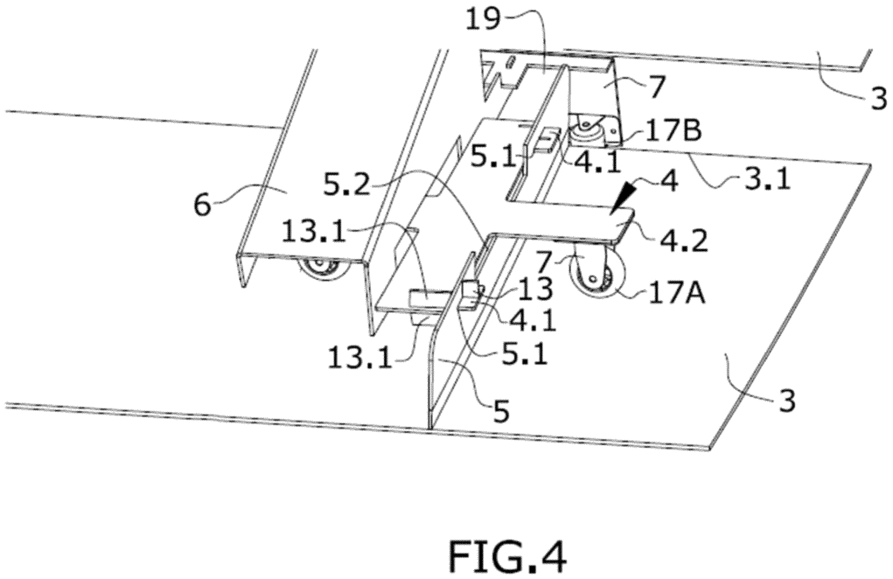

Figure 2 shows the cleaning device (2) alone with its main elements, and in it the mobile frame (6), and attached to the mobile frame (6), the connection means (4) with a cross or T-shaped configuration (observed in detail in Figures 3 and 4), the cleaning means (5), the guidance system (8), and the spraying means (9) can be seen.

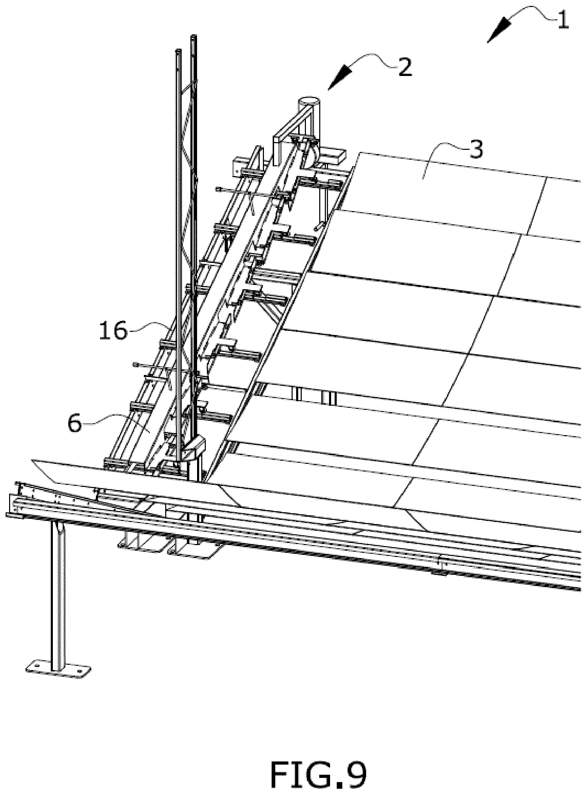

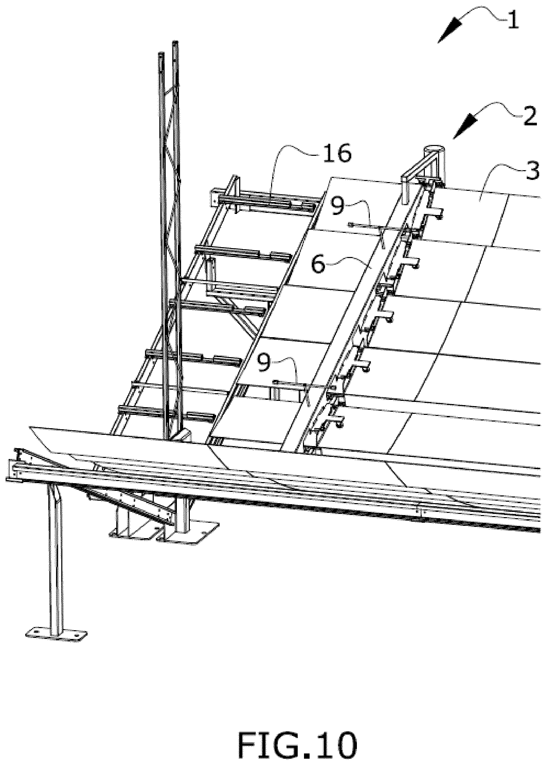

This cleaning device (2) is suitable for being installed in solar concentration systems (1) or collectors with a linear Fresnel configuration (observed in Figures 9 and 10). In particular, these solar concentration systems (1) comprise a plurality of rows of mirrors or reflectors (3) distributed in two sections separated or distinguished from one another by a receiver tube.

The mobile frame (6) shown in Figure 2 has a beam configuration with an approximate length equivalent to halve the width of a collector of the solar concentration system (1), such that the present cleaning device (2) can clean an entire section of the collector in a single pass. There are several possibilities for making the mobile frame (6) which meet the rigidity, resistance, and lightweight requirements of the invention. The embodiment shown in Figures 3-5 comprises an aluminum profile and two steel sheets screwed to both sides of the profile. These sheets can be die cut or formed in any other way so as to provide securing points from the remaining elements of the cleaning device (2), for example by means of the formation of protrusions, recesses, or bores arranged according to the configuration of the solar concentration system (1).

In one embodiment, the connection means (4) are welded to the mobile frame (6), and the cleaning means (5) and the support system (7) are assembled on these connection means (4).

The guidance system (8) is positioned at a lateral end of the mobile frame (6) and spaced from same, as well as also spaced from the rows of reflectors (3), as observed in Figure 1.

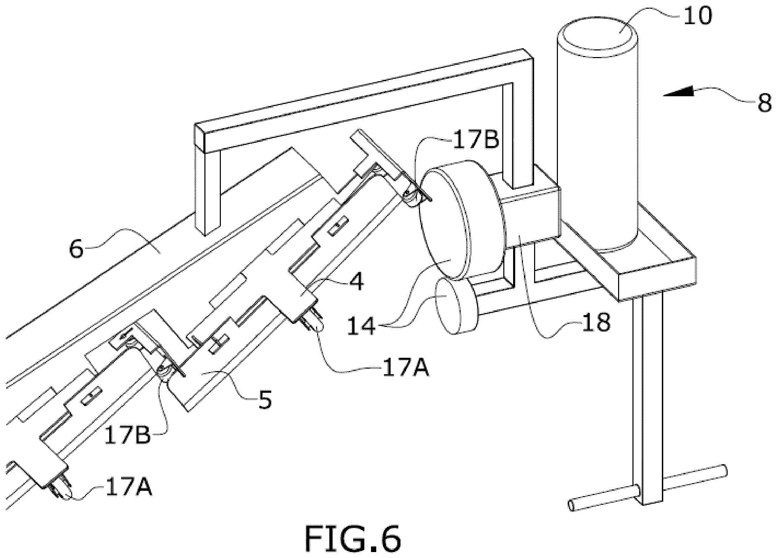

In the embodiment shown, the spraying means (9) are attached to the mobile frame (6) and comprise a fluid receptacle (10) (shown in Figures 6-7), an impulse pump, and a plurality of conduits (not shown in the figures) connecting the impulse pump with respective spray nozzles distributed along the mobile frame (6) such that they cover the largest possible surface of reflectors (3). In operation, the water stored in the receptacle (10) is circulated either by gravity or else by means of the impulse pump through the conduits to the respective nozzles, which spray the surface of the reflectors (3), for example by means of a sprayer.

Figures 3, 4, and 5 furthermore show how the cleaning means (5) are attached to the connection means (4). In this embodiment, the cleaning means (5) are configured as an assembly with a squeegee (11) which is suspended from the connection means (4). For this purpose, the cleaning means (5) are a sheet with two slots (5.1) and an elongated recess (5.2) between them, such that tabs (4.1) of the connection means (4) are introduced in the slots (5.1) and one of the arms (4.2) of the connection means (4) passes over the elongated recess (5.2). As a result, the cleaning means (5) are suspended from the connection means (4). The present cleaning device (2) is configured for the cleaning means (5) to be arranged for each row of reflectors (3) of the solar concentration system (1) as shown in Figure 4.

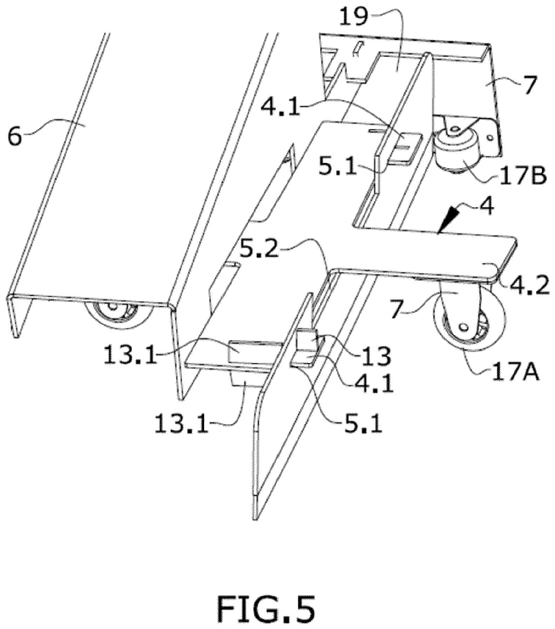

In order to limit the swinging movement of the cleaning means (5), there are arranged on both sides of the cleaning means (5) stops (13) with an inclined edge (13.1) (observed in Figures 4 and 5) configured as trapezoid-shaped pins, such that the cleaning means (5) can swing until they abut with the inclined edge (13.1) of one of the stops (13). If these stops (13) were not present, the cleaning means (5) could swing without any limits, so the cleaning means (5) would not exercise any tension on the surface of the reflectors (3).

During the usual operation of the cleaning device (2), to achieve effective cleaning there must be a certain amount of a cleaning fluid, usually water, on the surface of the reflectors (3), and that is achieved by the spraying means (9).

To remove or dry the traces of water that may remain on the surface of the reflectors (3), the cleaning device (2) has a squeegee (11). As a result of the squeegee (11), traces of dirt and water can be removed from the surface of the reflectors (3) such that no traces of dirt and water which, when dried, leave spots on the reflectors (3) are left behind, so the purity of the water used in cleaning is not a critical factor, and water with a lower degree of purity can be used without reducing the reflectance of the reflectors and therefore without losing energy efficiency.

Figures 3 to 5 also show the support system (7) which serves for supporting the mobile frame (6) itself on one or several points of the reflector (3) by means of second rolling elements (17A, 17B) or wheels. On one hand, the support system (7) comprises second rolling elements (17A) or wheels attached to the interconnection means (4). In this case, the second rolling elements (17A) are configured for supporting the cleaning device (2) in a sliding manner on the surface of the reflectors (3). In particular, Figure 4 shows the second rolling elements (17A) of the support system (7) in direct contact with the surface of the reflectors (3).

Moreover, the support system (7) in turn is rigidly attached to the mobile frame (6), and to prevent the support system (7) from sliding transverse to the longitudinal direction (L) on the surface of the reflectors (3), the cleaning device (2) further comprises other second rolling elements (17B) which are supported on the edge (3.1) of the reflectors (3) (observed in Figure 4). These second rolling elements (17B) are attached to the mobile frame by means of a protruding structure (19) and furthermore allow part of the load of the cleaning device (2) to be distributed on the edge (3.1) of the reflectors (3). Not only is the cleaning device (2) supported on the reflectors (3), but it also keeps the mobile frame (6) separated from these reflectors (3).

The wheels (17A, 17B) of the support system (7) are preferably manufactured from a material that is softer than the surface of the reflectors (3), for example from gum or rubber, and are uniformly distributed along the mobile frame (6) so as to distribute the weight on the reflectors (3) better without damaging their surface. In other embodiments, the support system (7) comprises a larger or smaller number of wheels (17A, 17B) and/or supports, for example including several wheels per support.

According to the second wheels (17B) supported on the edge (3.1) of three rows of reflectors (3), the number and the arrangement of these second wheels (17B) depends on the characteristics of the solar concentration system (1), in particular on its dimensions and its weight. Both the wheels (17A, 17B) supported on the surface of the reflectors (3) and those supported on the edge (3.1) thereof are rigidly attached to the mobile frame (6) by means of arrangements of screwed sheets, flats, or the like, although it would also be possible to attach them to the mobile frame (6) by means of welding, riveting, or even manufacturing them as an integral part of the mobile frame (6), so as to avoid assembly steps and to save in intermediate manufacturing steps.

In the embodiment shown in these Figures 3-5, the mobile frame (6) has a U-shaped profile the opening of which is opposite the surface of the reflectors (3) when the cleaning device (2) is arranged in a solar concentration system (1).

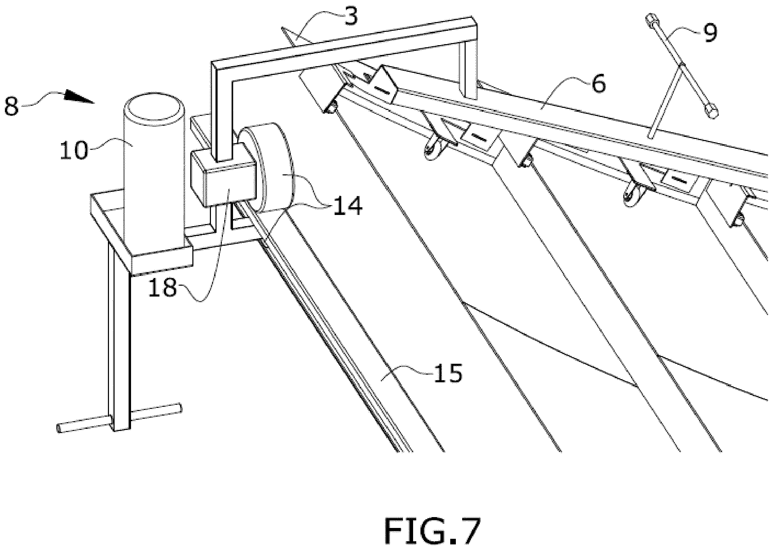

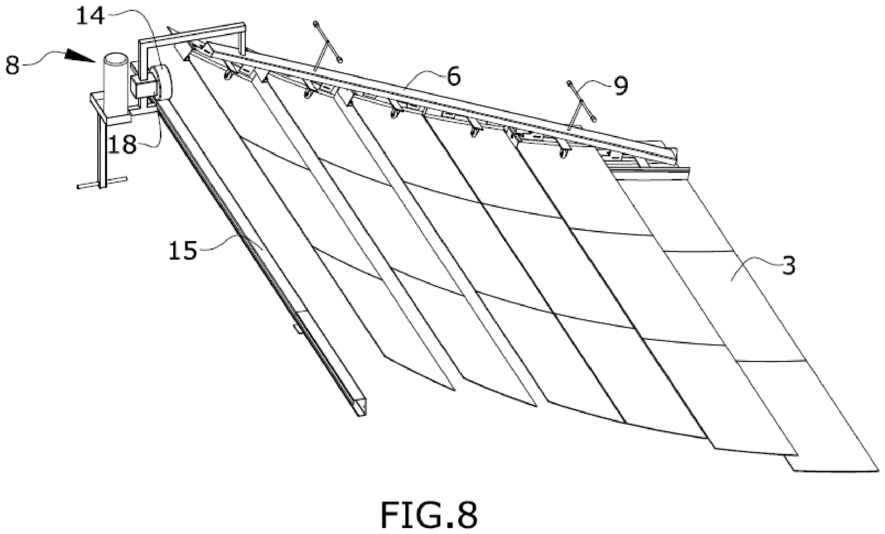

Figures 6-8 show in detail a guidance system (8) comprising two first rolling elements (14) or wheels, one being of a larger size than the other, and a rail (15). The first rolling elements (14) are in charge of guiding the movement of the mobile frame (6) by means of the rolling of these first wheels (14) in the rail (15) which is arranged parallel to the rows of the reflectors (3). In particular, the smaller sized wheel (14) slides in the groove formed by the rail (15) itself while the larger sized wheel (14) slides on the outer upper surface of this rail (15), as observed in detail in Figure 7.

In some embodiments, the operation of the cleaning device (2) can be automated to varying degrees, based on user needs or environmental conditions. In the simplest case, the cleaning device (2) includes an electric drive system (18), such as an electric motor powered by a battery or by an external power supply, arranged in the guidance system (8). In turn, the cleaning device (2) would include a switch for operating the rotational movement of the first rolling elements (14) on the rail (15), driving the mobile frame (6).

In the following level of automation, in addition to the electric actuator, the cleaning device (2) comprises an electronic control unit, such as a programmable logic controller (PLC), a computer, or a similar device, capable of starting up the cleaning device (2) and completing the cleaning cycle based on previously programmed instructions; this embodiment may comprise one or more sensors to provide input signals to the computer, for example, limit switches arranged at the ends of the rows of reflectors (3) for detecting when the mobile frame (6) reaches the end of the rows of reflectors (3), temperature and moisture sensors, or brightness sensors, capable of determining the optimal time for cleaning the collectors based on the existence of dew and the solar radiation. All the aforementioned automation elements can conveniently be deactivated to enable operating the cleaning device (2) manually.

Figures 9-10 show a solar concentration system (1) with a plurality of reflectors (3) arranged in rows at different heights. A resting structure (16) positioned at an end of the solar concentration system (1) is in turn shown, this resting structure (16) being the element on which the moving frame (6) of the present cleaning device (2) is supported.

### Test

A test was carried out with the cleaning device of the first embodiment in order to verify the reduced water consumption while at the same time achieving correct cleaning of the surface of the reflectors of the solar concentration system with a linear Fresnel configuration.

More specifically, cleaning tests were performed in a prototype collector with 6 squeegees with a configuration complementary to the surface of the reflectors, arranged substantially transverse to the longitudinal direction (L) and configured for contacting the mentioned surface of the reflectors. The amount of water used on the surface of the reflectors was gradually reduced until performing correct cleaning with just 5 cm³/m².

With the indicated amount of water of 5 cm³/m², tests were performed at different forward movement speeds of the cleaning device, obtaining good results from 7 m/min up to 35 m/min.

The cleaned surface, for the tested cleaning device prototype with six squeegees, was 22.2 m² for the minimum speed and 111.1 m² for the maximum speed.

Likewise, the angle formed by the metallic part of each squeegee with respect to the vertical in these tests was 5°. Other values, namely 55°, 45°, 18°, and 5° were previously tested, with the optimal section being between 25° and 3°, and particularly the aforementioned 5°.

The values indicated above are reflected in the following table.

| **H₂O (cm³/m²)** | **Angle (°)** | **Forward movement speed (m/min)** | **Cleaned surface (m²/min)** | **Result** |
|---|---|---|---|---|
| 5 | 5 | 7 | 22.22 | OK |
| 5 | 5 | 14 | 44.44 | OK |
| 5 | 5 | 35 | 111.09 | OK |

Existing cleaning technologies have water consumption values much higher than those above. In that sense, in the document entitled "Project Deliverable 3.4: Survey of Existing Automated Mirror Cleaning Technologies" of INSHIP (Integrating National Research Agendas on Solar Heat for Industrial Processes) (Ref. Ares (2017) 5428660 - 08/11/2017) several consumption examples are indicated. For example, the consumption of a cleaning robot for linear Fresnel collectors ("4.2.3 Linear Fresnel Collectors") is indicated as being 15 cm³/m² (0.015 l/m²), and for cleaning with brushes, consumption values between 680 cm³/m² and 1100 cm³/m² are indicated.

Accordingly, it can be established that the consumption of the cleaning device of the invention has a water (H₂O) consumption that is 1/3 lower with respect to known systems for the same surface to be cleaned.

### Additional embodiment

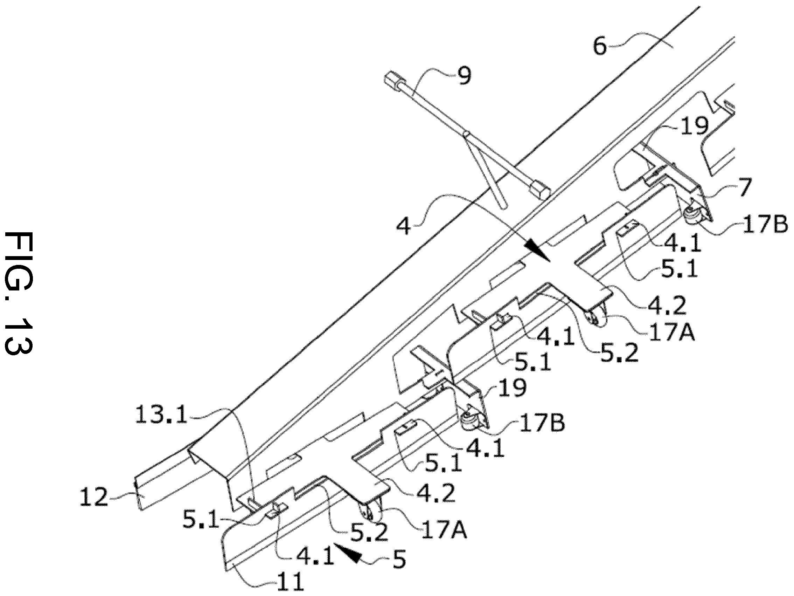

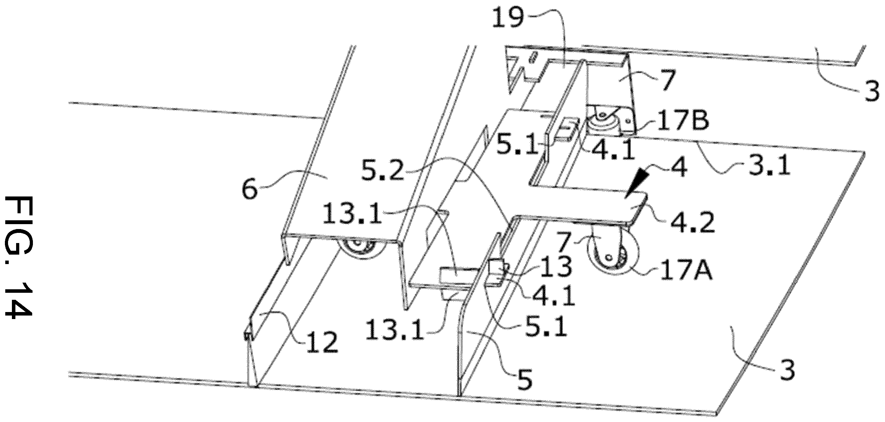

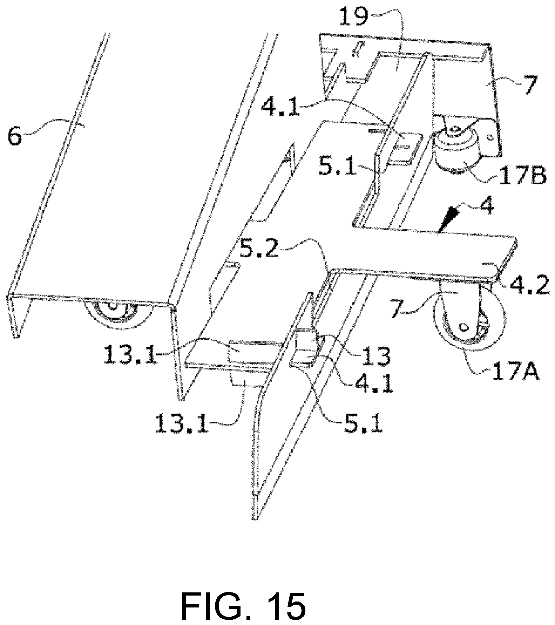

Figures 13-15 show an additional embodiment in which there is also a fixed brush (12) having flexible bristles attached to the mobile frame (6) on the side opposite the cleaning means (5), i.e., the fixed brush (12) is arranged on one side of the mobile frame (6) and the cleaning means (5) together with the connection means (4) are arranged on the other side thereof. The main function of the fixed brush (12) is to move the larger sized solid dirt particles so as to facilitate or complement the function of the cleaning means (5). The bristles of the brush (12) also allow distributing the cleaning fluid, wetting the surface of the mirrors, and entraining part of the dirt. Other embodiments comprise other elements instead of brushes (12), for example, ultrasonic cleaning devices, rollers, or cylindrical brushes.

During the usual operation of the cleaning device (2), to remove the dirt, the fixed brush (12) must contact the surface of the reflectors (3), entraining the dirt from the surface as a result of the movement of the mobile frame (6). Furthermore, like in the first embodiment, to achieve effective cleaning there has to be a certain amount of a cleaning fluid, usually water, on the surface of the reflectors (3), and that is achieved by the spraying means (9).

To remove or dry the traces of water that may remain on the surface of the reflectors (3) after the passage of the fixed brush (12), the cleaning device (2) has the same squeegee (11) as in the first embodiment. As a result of the squeegee (11), traces of dirt and water can be removed from the surface of the reflectors (3) such that no traces of dirt and water which, when dried, leave spots on the reflectors (3) are left behind, so the purity of the water used in cleaning is not a critical factor, and water with a lower degree of purity can be used without reducing the reflectance of the reflectors and therefore without losing energy efficiency

### Cleaning method

The cleaning method for the solar concentration system (1) according to the invention requires providing at least one cleaning device (2); to take advantage of the maximum potential of the invention, the solar concentration system (1) must comprise a plurality of devices (2), preferably one or two devices (2) per collector. Therefore, when the cleaning cycle has ended, the device (2) does not have to be transferred from one section of the collector to another or from one collector of the solar concentration system (1) to another.

Some solar concentration systems (1) have a cleaning position for their reflectors (3), wherein the reflectors (3) change their angle of orientation so as to allow the operation of the cleaning device (2); in solar concentration systems (1) of this type, this will be the first step of the cleaning method. In this sense, once the optimal time interval for cleaning the reflectors (3) has started, and the reflectors (3) are arranged in a manner that is compatible with the cleaning device (2), the mobile frame (6), preferably placed on a resting structure (16) at a first end of the collector (as shown in Figure 9), starts its movement along the longitudinal direction (L) of a row of reflectors (3) (shown in Figure 10), and it simultaneously starts operating the impulse pump, which begins to spray the upper surface of the reflectors (3) with a cleaning fluid.

By means of this movement, both the fixed brush (12) and the cleaning means (5) contact the upper surface of the reflectors (3) of the row, such that they clean the dirt as the mobile frame (6) moves.

The movement of the cleaning device (2) ends at the second end of the rows of reflectors (3), opposite the first end. In a preferred embodiment, at the second end of the rows of reflectors (3) there is a resting structure (16) which allows the cleaning device (2) to continue its movement beyond the second end of the rows of reflectors (3). With this feature, the cleaning device (2) completes the cleaning of the rows and moves the water entrained by the squeegees (11) beyond the edge of the mirrors (3).

In this sense, once the mobile frame (6) has reached the second end of the solar concentration system (1), it changes the direction of movement so that the mobile frame (6) returns to the initial position.

### Clauses

1. A cleaning device (2) for a solar concentration system (1) with a linear Fresnel configuration, wherein the solar concentration system (1) comprises a plurality of reflectors (3) that are substantially elongated and arranged in rows parallel to a longitudinal direction (L);
   wherein the cleaning device (2) comprises:
      a mobile frame (6) configured for moving along the longitudinal direction (L),
      connection means (4) rigidly attached to the mobile frame (6),
      a guidance system (8) attached to the mobile frame (6) and configured for guiding the movement of the cleaning device (2) along the longitudinal direction (L),
      a support system (7) attached to the mobile frame (6) and configured for supporting the cleaning device (2) in a sliding manner on at least one point of the solar concentration system (1), and for separating the mobile frame (6) of the reflectors (3),
      spraying means (9) for spraying the surface of the reflectors (3) with a cleaning fluid, and
      at least a set of cleaning means (5) for each row of reflectors (3), configured for cleaning and drying the surface of the reflectors (3),
   such that the cleaning means (5) allow a plurality of rows of reflectors (3) to be cleaned simultaneously by means of the movement of the mobile frame (6) along the longitudinal direction (L) between a first end of the rows of reflectors (3) and a second end of the rows of reflectors (3).
2. The cleaning device (2) according to the preceding clause, wherein the cleaning means (5) comprise a squeegee (11) with a configuration complementary to the surface of the reflectors (3), arranged substantially transverse to the longitudinal direction (L) and configured for contacting the surface of the reflectors (3).
3. The cleaning device (2) according to any of the preceding clauses, wherein the cleaning means (5) are attached in an articulated manner to the connection means (4), such that the cleaning means (5) can swing suspended from the connection means (4).
4. The cleaning device (2) according to the preceding clause, wherein the connection means (4) comprise at least one stop (13) configured in order to limit the swinging movement of the cleaning means (5).
5. The cleaning device (2) according to any of the preceding clauses, further comprising a fixed brush (12) attached to the mobile frame (6) and configured for removing solid dirt particles from the surface of the reflectors (3).
6. The cleaning device (2) according to any of the preceding clauses, wherein the connection means (4) have a planar configuration, and comprise two arms parallel to the longitudinal direction (L) and two arms perpendicular to the longitudinal direction (L).
7. The cleaning device (2) according to any of the preceding clauses, wherein the guidance system (8) comprises one or more first rolling elements (14) guiding the movement of the mobile frame (6) by means of rolling on a rail (15) arranged parallel to the rows of reflectors (3).
8. The cleaning device (2) according to any of the preceding clauses, wherein the support system (7) comprises one or more second rolling elements (17A) for supporting the mobile frame (6) on the surface of the reflectors (3) by means of rolling, these second rolling elements (17A) being attached to the mobile frame (6) by the interconnection means (4).
9. The cleaning device (2) according to any of the preceding clauses, wherein the support system (7) comprises one or more second rolling elements (17B) for supporting the mobile frame (6) on an edge (3.1) of the reflectors (3) by means of rolling, these second rolling elements (17B) being attached to the mobile frame (6) by means of a protruding structure (19).
10. The cleaning device (2) according to any of the preceding clauses, wherein the guidance system (8) further comprises an electric drive system (18) configured for moving the mobile frame (6) along the longitudinal direction (L) by applying torque on the first rolling elements (14) of the guidance system (8).
11. The cleaning device (2) according to any of the preceding clauses, wherein the mobile frame (6) comprises a beam with a U-shaped profile arranged substantially transverse to the longitudinal direction (L).
12. The cleaning device (2) according to any of the preceding clauses, comprising at least one resting structure (16) configured for supporting the mobile frame (6) and configured for being arranged at one end or both ends of the solar concentration system (1) according to the longitudinal direction (L).
13. The cleaning device (2) according to any of the preceding clauses, wherein the spraying means (9) comprise a water receptacle (10), an impulse pump, and a plurality of sprayers, all of them being in fluid communication and configured for spraying the surface of the reflectors (3) with a cleaning fluid.
14. A solar concentration system (1) with a linear Fresnel configuration, comprising a cleaning device (2) according to any of clauses 1 to 13.
15. A cleaning method for a solar concentration system (1) with a linear Fresnel configuration which is applied when the action for cleaning the surface of the reflectors (3) of the solar concentration system (1) is required, wherein the method comprises the following steps:
   - providing a solar concentration system (1) according to clause 14,
   - moving the mobile frame (6) between a first end of the solar concentration system (1) and a second end of the solar concentration system (1) opposite the first end, according to the longitudinal direction (L), while at the same time the spraying means (9) spray the surface of the reflectors (3) with a cleaning fluid,
   - once the mobile frame (6) has reached the second end of the solar concentration system (1), changing the direction of movement so that the mobile frame (6) returns to the initial position.

## Claims

1. A cleaning device (2) for a solar concentration system (1) with a linear Fresnel configuration, wherein the solar concentration system (1) comprises a plurality of reflectors (3) that are substantially elongated and arranged in rows parallel to a longitudinal direction (L);
wherein the cleaning device (2) comprises:
a mobile frame (6) configured for moving along the longitudinal direction (L),
connection means (4) rigidly attached to the mobile frame (6),
a guidance system (8) attached to the mobile frame (6) and configured for guiding the movement of the cleaning device (2) along the longitudinal direction (L),
a support system (7) attached to the mobile frame (6) and configured for supporting the cleaning device (2) in a sliding manner on at least one point of the solar concentration system (1), and for separating the mobile frame (6) from the reflectors (3),
spraying means (9) for spraying the surface of the reflectors (3) with a cleaning fluid, and
at least a set of cleaning means (5) for each row of reflectors (3), configured for cleaning and drying the surface of the reflectors (3),
such that the cleaning means (5) allow a plurality of rows of reflectors (3) to be cleaned simultaneously by means of the movement of the mobile frame (6) along the longitudinal direction (L) between a first end of the rows of reflectors (3) and a second end of the rows of reflectors (3),
wherein the cleaning means (5)
comprise a squeegee (11) with a configuration complementary to the surface of the reflectors (3), arranged substantially transverse to the longitudinal direction (L) and configured for contacting the surface of the reflectors (3), and
are attached in an articulated manner to the connection means (4), such that the cleaning means (5) can swing suspended from the connection means (4), and
wherein the connection means (4) comprise at least one stop (13) configured in order to limit the swinging movement of the cleaning means (5).

2. The cleaning device (2) according to claim 1, wherein the connection means (4) have a planar configuration and comprise two arms parallel to the longitudinal direction (L) and two arms perpendicular to the longitudinal direction (L).

3. The cleaning device (2) according to any of the preceding claims, wherein the guidance system (8) comprises one or more first rolling elements (14) guiding the movement of the mobile frame (6) by means of rolling on a rail (15) arranged parallel to the rows of reflectors (3).

4. The cleaning device (2) according to any of the preceding claims, wherein the support system (7) comprises one or more second rolling elements (17A) for supporting the mobile frame (6) on the surface of the reflectors (3) by means of rolling, these second rolling elements (17A) being attached to the mobile frame (6) by interconnection means (4).

5. The cleaning device (2) according to any of the preceding claims, wherein the support system (7) comprises one or more second rolling elements (17B) for supporting the mobile frame (6) on an edge (3.1) of the reflectors (3) by means of rolling, these second rolling elements (17B) being attached to the mobile frame (6) by means of a protruding structure (19).

6. The cleaning device (2) according to any of the preceding claims, wherein the guidance system (8) further comprises an electric drive system (18) configured for moving the mobile frame (6) along the longitudinal direction (L) by applying torque on the first rolling elements (14) of the guidance system (8).

7. The cleaning device (2) according to any of the preceding claims, wherein the mobile frame (6) comprises a beam with a U-shaped profile arranged substantially transverse to the longitudinal direction (L).

8. The cleaning device (2) according to any of the preceding claims, comprising at least one resting structure (16) configured for supporting the mobile frame (6) and configured for being arranged at one end or both ends of the solar concentration system (1) according to the longitudinal direction (L).

9. The cleaning device (2) according to any of the preceding claims, wherein the spraying means (9) comprise a water receptacle (10), an impulse pump and a plurality of sprayers, all of them being in fluid communication and configured for spraying the surface of the reflectors (3) with a cleaning fluid.

10. A solar concentration system (1) with a linear Fresnel configuration comprising a cleaning device (2) according to any of claims 1 to 9.

11. A cleaning method for a solar concentration system (1) with a linear Fresnel configuration which is applied when the action for cleaning the surface of the reflectors (3) of the solar concentration system (1) is required, wherein the method comprises the following steps:
- providing a solar concentration system (1) according to claim 10,
- moving the mobile frame (6) between a first end of the solar concentration system (1) and a second end of the solar concentration system (1) opposite the first end, according to the longitudinal direction (L), while at the same time the spraying means (9) spray the surface of the reflectors (3) with a cleaning fluid,
- once the mobile frame (6) has reached the second end of the solar concentration system (1), changing the direction of movement so that the mobile frame (6) returns to the initial position.
